# EUROPEAN PATENT APPLICATION

(11) **EP 2 186 778 A1**
(43) Date of publication of application: **19.05.2010**
(21) Application number: 07832809.3
(22) Date of filing: 29.11.2007
(51) Int. Cl.: C01C 1/04, C01B 3/38

(54) **PROCESS AND APPARATUS FOR PRODUCTION OF RAW GAS FOR AMMONIA SYNTHESIS**

(71) Applicant: JGC Corporation, Chiyoda-Ku Tokyo 100-0004 (JP); Osaka Gas Company Limited, Osaka-shi Osaka 541-0046 (JP)
(72) Inventor: YAMADA, Nobuhiro, Ibaraki-gun Ibaraki 313-1313 (JP); MASHIKO, Yoshinori, Yokohama-shi Kanagawa 220-6001 (JP); FUNATSU, Shuichi, Yokohama-shi Kanagawa 220-6001 (JP); WATANABE, Yoshiyuki, Yokohama-shi Kanagawa 220-6001 (JP)
(74) Representative: Ilgart, Jean-Christophe
(86) International application number: PCT/JP2007/073109
(87) International publication number: WO 2009/069220

(57) **Abstract**

There is provided a method for producing a raw gas for ammonia synthesis in which light hydrocarbons from a tube 3, steam from a tube 6 and oxygen-enriched air having an oxygen concentration of 40 to 60% by volume from an oxygen-enriched air supply source 7 are heated and are then introduced to a one-step reforming reactor 5 to thereby carry out a steam reforming reaction and an air partial oxidation reaction at the same time, and the resultant is subsequently passed through a shift reactor 12, a decarbonating device 14 and a methanation reactor 16 to remove carbon monoxide and carbon dioxide, thereby yielding a raw gas suitable for ammonia synthesis having a hydrogen to nitrogen molar ratio of about 3:1.

## Description

### TECHNICAL FIELD

The present invention relates to a method for producing a raw gas for ammonia synthesis which contains hydrogen and nitrogen at a molar ratio of about 3:1 using light hydrocarbons such as natural gas as raw materials, and also relates to a production apparatus therefor.

### BACKGROUND ART

As a method for producing such a raw gas for ammonia synthesis, for example, the following method is available. First, steam was added to light hydrocarbons such as natural gas, and the mixture is then fed to a primary reformer, where the steam reforming takes place, thereby obtaining a gas containing hydrogen and carbon monoxide. Subsequently, air is added to this gas, and the mixture is then fed to a secondary reformer, where the air partial oxidation takes place, thereby obtaining a synthesis gas containing hydrogen, nitrogen, carbon monoxide carbon dioxide, water, or the like.

Thereafter, the synthesis gas is transferred to a shift reactor, and carbon monoxide and water contained therein are converted to carbon dioxide and hydrogen via a shift reaction, thereby reducing the amount of carbon monoxide while increasing the amount of hydrogen. Subsequently, the carbon dioxide contained therein is removed by alkali cleaning, and a methanation reaction is performed in which the residual carbon monoxide is further reacted with hydrogen to produce methane and water, thereby yielding a raw gas for ammonia synthesis which contains hydrogen and nitrogen at a molar ratio of 3:1

In this two-step reforming process, because the reaction conducted in the primary reformer is an endothermic reaction, it is necessary to heat a reaction tube to high temperatures from the outside. For this reason, extra energy is required, and the size of the primary reformer also needs to be increased.

In Japanese Unexamined Patent Application, First Publication No, Sho 59-195502, a production method is disclosed in which a synthesis gas obtained as a result of primary and secondary reforming reactions is further subjected to a shift reaction, alkali cleaning and methanation reaction, and thereafter, is further subjected to a pressure swing adsorption step and nitrogen addition step in order to adjust the ratio of hydrogen and nitrogen contents.

In this method, the complex production facilities will be required, and a portion of hydrogen in the raw gas for ammonia synthesis which is generated as a product will be lost during the pressure swing adsorption step.
In the description of United States Patent No. 4792441, as a method for reforming light hydrocarbons, a method is disclosed in which a steam reforming reactor employing an external heating system and a partial oxidation reaction using oxygen-enriched air are combined in 2 steps.
In the description of United States Patent No, 5202057, as a method for reforming light hydrocarbons, a method is disclosed in which hydrogen is produced solely by a steam reforming process employing an external heating system, whereas nitrogen is produced by a separation and purification process from the flue exhaust gas that contains air used for external heating, and the produced hydrogen and nitrogen are finally mixed to obtain a raw gas for ammonia synthesis.
However, since main reforming reactors involved in these methods employ an external heating system, the facilities may increase in size or may become inadequate with respect to high pressure reactions, and also the facility configuration may become complex.

### DISCLOSURE OF INVENTION

### PROBLEMS TO BE SOLVED BY THE INVENTION

An object of the present invention is to achieve a method for producing a raw gas for ammonia synthesis which is capable of simplifying a production apparatus therefor and also suppressing the energy cost when producing the raw gas for ammonia synthesis using light hydrocarbons as raw materials, and also to achieve the production apparatus.

### MEANS FOR SOLVING THE PROBLEMS

The method for producing a raw gas for ammonia synthesis according to the present invention is **characterized in that** an oxygen-enriched air having an oxygen concentration of 40 to 60% by volume is used when yielding a raw gas for ammonia synthesis containing hydrogen and nitrogen by supplying light hydrocarbons, steam and the oxygen-enriched air for a catalytic partial oxidation reaction.

In the catalytic partial oxidation reaction, a catalyst may be used, in which at least one metal selected from group VIII metals in the periodic table and gold is supported.
The catalytic partial oxidation reaction may be carried out at a pressure of 1 to 10 MPa and a temperature of 200 to 1,500°C.

The ratio between the oxygen in the oxygen-enriched air and the carbon in the light hydrocarbons (i.e., O₂/C) may be from 0,3 to 1.0 (mol/mol).
The ratio between the steam and the carbon in the light hydrocarbons may be from 1 to 5 (mol/mol).
The catalytic partial oxidation reaction may be carried out in a one-step reactor.

The apparatus for producing a raw gas for ammonia synthesis according to the present invention is characterized by including an oxygen-enriched air supply source which generates and supplies an oxygen-enriched air having an oxygen concentration of 40 to 60% by volume; and a catalytic reforming reactor which introduces the oxygen-enriched air from the oxygen-enriched air supply source, steam and light hydrocarbons and carries out a catalytic partial oxidation reaction.

The catalytic reforming reactor may be a reactor filled with a catalyst in which a group VIII metal in the periodic table is supported.
The oxygen-enriched air supply source may include any one of an oxygen separation membrane unit, an air liquefaction/separation unit and a pressure swing adsorption unit.
The catalytic reforming reactor may be a one-step reactor.

### EFFECT OF THE INVENTION

According to the present invention, since the steam reforming reaction and air partial oxidation reaction proceed at the same time in one step by using an oxygen-enriched air having an oxygen concentration of 40 to 60% by volume, only one reactor is required, and thus it is possible to simplify the production facilities. In addition, since there is no need to heat a reaction tube, an external heating process is no longer required, and the reaction temperature can be suppressed to a low level, and thus the deterioration of catalysts can be prevented. Furthermore, it is possible to obtain a raw gas for ammonia synthesis which contains hydrogen and nitrogen at a molar ratio of about 3:1 without providing a pressure swing adsorption process or the like in the later step.

### BRIEF DESCRIPTION OF THE DRAWING

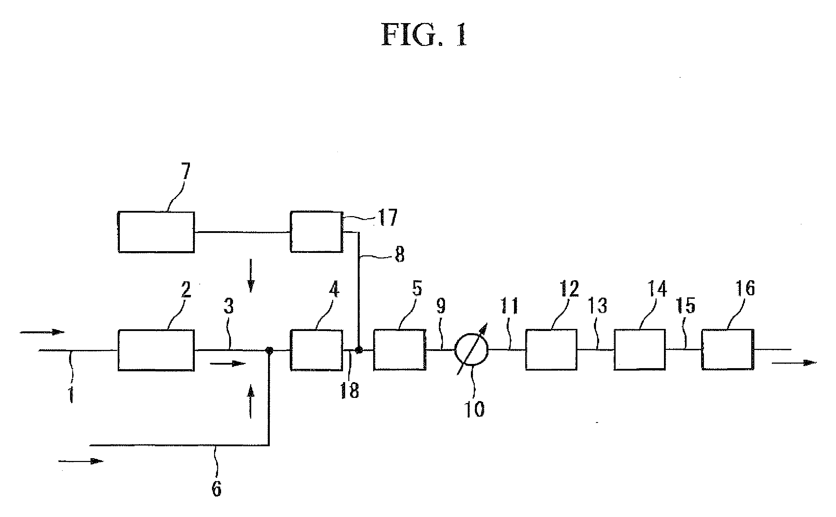

FIG. 1 is a schematic configuration diagram showing an example of a production apparatus of raw gas for ammonia synthesis according to the present invention.

### DESCRIPTION OF THE REFERENCE SYMBOLS

5: Catalytic reforming reactor
7: Oxygen-enriched air supply source

### BEST MODE FOR CARRYING OUT THE INVENTION

FIG. 1 shows an example of a production apparatus of raw gas for ammonia synthesis according to the present invention.
Light hydrocarbons to be used as raw materials such as natural gas, naphtha and petroleum gas are transferred from a tube 1 to a desulfurization reactor 2, and the sulfur components contained in the light hydrocarbons are removed therein. As a desulfurization reactor 2, for example, a device including a reduction reactor in which the sulfur components in the raw gas are reduced with hydrogen to form hydrogen sulfide and an adsorber that adsorbs the formed hydrogen sulfide is used.

The desulfurized light hydrocarbons are transferred to a one-step catalytic reforming reactor 5 from a tube 3 via a heater 4. During this process, steam is introduced from a tube 6 that merges with the tube 3. A mixed gas composed of light hydrocarbons and steam is transferred to the heater 4, heated therein, and is then transferred to the one-step catalytic reforming reactor 5. On the other hand, oxygen-enriched air is fed from an oxygen-enriched air supply source 7 to a heater 17, and the heated oxygen-enriched air joins the mixed gas through a tube 8 that merges with a tube 18. During this process, when the temperature of the mixed gas formed of desulfurized light hydrocarbons, steam and oxygen-enriched air reaches a temperature range achieved after heating which will be described later, it is also possible to omit at least one of the heater 4 and heater 17.

The steam used has a pressure of about 1 to 10 MPa. In addition, as the oxygen-enriched air supply source 7, a supply source that generates and supplies an oxygen-enriched air having an oxygen concentration of 40 to 60% by volume is used. More specifically, a supply source that includes an oxygen separation membrane unit, an air liquefaction/separation unit, a pressure swing adsorption unit or the like is used.

The concentration of oxygen in the oxygen-enriched air is an important factor in the present invention. If the concentration is less than 40% by volume, the amount of unreacted methane serving as a raw material in the synthesis gas obtained in the one-step catalytic reforming reactor 5 increases, and thus the reaction efficiency declines. On the other hand, if the concentration exceeds 60% by volume, the yield of raw gas for ammonia synthesis in the obtained synthesis gas considerably reduces, and thus the reaction efficiency again declines, which makes both of these cases unsuitable. Although the concentration is not particularly limited, an example of a more preferred oxygen concentration is from 45 to 55% by volume,
In addition, the pressure of the oxygen-enriched air is set to about 1 to 10 MPa. Although the pressure is not particularly limited, an example of a more preferred pressure of the oxygen-enriched air is from 1.3 to 6,0 MPa.

The heater 4 is a heater that heals the mixed gas of light hydrocarbons and steam up to an inlet temperature of the one-step catalytic reforming reactor 5, and it is preferable that the temperature be about 200 to 400°C as an indicating temperature for suppressing the spontaneous combustion of an inflammable gas that includes oxygen and for later heating the mixed gas up to a reaction initiation temperature. Although the temperature is not particularly limited, an example of a more preferred heating temperature is from 220 to 350°C, On the other hand, the heater 17 is a heater that heats the oxygen-enriched air up to the inlet temperature of the one-step catalytic reforming reactor 5.
It is preferable to set the ratio between the oxygen in the oxygen-enriched air and the carbon in the light hydrocarbons (i.e., O₂/C) from 0.3 to 1.0 (mol/mol) in order to prevent the increase in the amount of residual methane unnecessary as synthesis gas and the efficiency reduction. Although the ratio is not particularly limited, an example of a more preferred ratio (O₂/C) is from 0.5 to 0.95 (mol/mol),
From the same reason as describe above, it is preferable to set the ratio between the steam and the carbon in the light hydrocarbons (i.e., H₂O/C) from 1 to 5 (mol/mol). Although the ratio is not particularly limited, an example of a more preferred ratio (H₂O/C) is from 2 to 4 (mol/mol).

After leaving the heater 4, the mixed gas is transferred to the one-step catalytic reforming reactor 5 while having a temperature of 200 to 400°C and a pressure of 1 to 10 MPa. Although the temperature and pressure of the mixed gas is not particularly limited, an example of a more preferred temperature and pressure is from 220 to 350°C and from 1.3 to 6 MPa, respectively.
The one-step catalytic reforming reactor 5 has a catalyst layer inside thereof and produces a raw gas for ammonia synthesis containing hydrogen and nitrogen by carrying out an oxidation reaction of light hydrocarbons using an oxygen-enriched air and a steam reforming reaction of light hydrocarbons at the same time. The reaction is an autothermal reforming reaction which does not require the supply of heat from the outside, and the temperature increase due to the heat of reaction occurs as the reaction proceeds while the gas passes through the catalyst layer. In general, conditions for the operation are selected so that the temperature of the produced gas is within a range from 800 to 1,200°C. Although the temperature of the produced gas is not particularly limited, an example of a more preferred temperature is from 850 to 1,050°C.

As the catalyst used in the one-step catalytic reforming reactor 5, a catalyst is preferred in which at least one metal selected from group VIII metals in the periodic table (i.e., Fe, Co, Ni, Ru, Rh, Pd, Os, Ir, Pt or the like) and gold is supported. Among the above metals, for example, one or more metals selected from rhodium, palladium, ruthenium, platinum and gold are preferable, and one or more metals selected from rhodium and ruthenium are more preferable. It is preferable that the carrier is formed of a heat resistant oxide or the like, and as the heat resistant oxide, alumina, magnesia or the like is preferable. A catalyst in which rhodium or ruthenium is supported by alumina or magnesia is particularly suitable. The amount of supported metal is about 0.01 to 3% by weight with respect to the weight of a carrier. Although the amount of supported metal is not particularly limited, an example of a more preferred amount is from 0.1 to 2% by weight.

Although the form of the carrier is not particularly limited, it may be in a granular form, and the shape of granules may be any shape, such as a spherical shape, an amorphous shape, a circular cylindrical shape (pellets), an oval spherical shape, a disk shape, a prismatic shape, a hollow cylindrical shape, or a mixture of these shapes. The size of the granules is not particularly limited, and is determined by taking the equipment scale, differential pressure between the reactors, or the like into consideration.

The temperature of the catalyst layer in the one-step catalytic reforming reactor 5 changes within the catalyst layer between the inlet and outlet, and it is operated so that the temperature of the catalyst layer as a whole is within the range from 200 to 1,500°C. When the temperature is less than 200°C, the catalyst performance declines due to the condensation of water in the raw gas, whereas the temperature exceeding 1,500°C may cause damage on the reactor material or may limit the reaction rate of light hydrocarbons. Accordingly, in view of the efficiency of the process as a whole, a temperature condition of 200 to 1,500°C is favorable.
Further, in terms of the reaction pressure of the one-step catalytic reforming reactor 5, as a result of considering the degree of difficultly regarding the supply to the ammonia synthesis step provided in the downstream side, the catalyst performance, the pressure resistance of the reactor, and the like in a comprehensive manner, it is favorable to conduct a reaction at a pressure from 1 to 10 MPa. Although the reaction pressure is not particularly limited, an example of a more preferred range for the reaction pressure is from 1.3 to 6 MPa

A synthesis gas generated in and emitted from the one-step catalytic reforming reactor 5 described above contains hydrogen, nitrogen, unreacted methane, carbon monoxide, carbon dioxide, water, argon or the like, and has a temperature of 800 to 1,500°C and a pressure of 1 to 10 MPa, respectively. Accordingly, in order to further process the synthesis gas so as to have an optimal composition as a raw gas for ammonia synthesis, the following post treatment step is added if necessary,

The synthesis gas is transferred to a heat exchanger 10 via a tube 9, cooled to a temperature of 200 to 400°C therein, and then transferred to a shift reactor 12 via a tube 11. In the shift reactor 12, a shift reaction is conducted in which the carbon monoxide and water contained in the synthesis gas are reacted, for example, in the presence of a shift reaction catalyst, and are converted to carbon dioxide and hydrogen, thereby reducing the carbon monoxide content while increasing the hydrogen content. For the shift reactor 12, a reactor which has been used conventionally can be used as it is. As the shift reaction catalyst, for example, a Fe-Cr-based catalyst, a Cu-Zn-based catalyst or the like can be used, although the catalyst is not limited to these examples,

The synthesis gas from the shift reactor 12 is transferred to a decarbonating device 14 via a tube 13, and the gas-liquid contact takes place therein with an aqueous alkaline solution, such as an aqueous amine solution, thereby removing the carbon dioxide contained in the synthesis gas.
The synthesis gas from the decarbonating device 14 is transferred to a methanation reactor 16 via a tube 15, and a trace amount of remaining carbon monoxide and hydrogen are reacted, for example, in the presence of a methanation reaction catalyst, and are converted to methane and water, thereby removing carbon monoxide. Also for the methanation reactor 16, a reactor which has been used conventionally can be used as it is. As the methanation reaction catalyst, for example, a nickel catalyst or the like can be used, although the catalyst is not limited to these example.

The synthesis gas emitted from the methanation reactor 16 contains hydrogen and nitrogen at a molar ratio of about 3:1, in addition to small amounts of methane, water and argon, and the synthesis gas can be used as it is as a raw gas for ammonia synthesis.
Examples for the present invention will be described below.

### Example 1

An oxygen-enriched air having an oxygen concentration of 45% by volume was prepared by diluting an oxygen source obtained in an air liquefaction/separation unit which had an oxygen concentration of 90% by volume with air. A mixed gas of 300°C was obtained by adding steam and the oxygen-enriched air as obtained above at flow rates of 5.9 kg/hr and 4 Nm³/hr, respectively, to a raw natural gas having a flow rate of 2.4 Nm³/hr which was obtained through a hydrodesulfurization process by adding hydrogen to a natural gas (having a composition of methane: ethane: propane: butane = 88.56: 7-21: 3.05: 1.18 in terms of mol%). The obtained mixed gas was introduced to a one-step catalytic reforming reactor, which was filled with a catalyst in which rhodium was supported by α-alumina and having a grain size of 3 mm, so that a catalyst-filled layer had a diameter of 5 cm and the filled catalyst reached a height of 50 cm.

After the initiation of the reaction followed by the stabilization of the reaction system, the composition of a synthesis gas obtained from the reactor outlet was measured. The composition was as follows. The reaction was conducted at a pressure of 2.5 MPa. The reactor was not heated from the outside because the reaction conducted in the reactor as a whole was an exothermic reaction, and the temperature of the synthesis gas obtained from the outlet was 900°C. In addition, although the temperature of a catalyst layer was 1,000°C, no catalyst deterioration was observed.
(Synthesis gas composition) methane: hydrogen: nitrogen: carbon monoxide: carbon dioxide: water: argon = 0.3: 31.0: 12.6: 7.7: 7.6: 40.6: 0.1 (mol%).

The above synthesis gas was cooled to 250°C, introduced to an isothermal shift reactor employing a multitubular cooling system, and was then subjected to a shift reaction to reduce the amount of carbon monoxide and to increase the amount of hydrogen, thereby yielding a gas having the following composition.
(Synthesis gas composition) methane: hydrogen: nitrogen: carbon monoxide: carbon dioxide: water: argon = 0.3: 38.5: 12.6: 0.2: 15.2: 33.1: 0.1 (mol%).

Furthermore, the obtained synthesis gas was passed through a carbon dioxide absorption tower to remove carbon dioxide, and was then transferred to a methanation reactor to remove the remaining carbon monoxide, thereby yielding a synthesis gas having the following composition, In terms of the reaction conditions in the methanation reactor, the temperature was about 300°C, the pressure was 2.1 MPa, and a commonly used nickel-based catalyst was used as a catalyst.
(Synthesis gas composition) methane: hydrogen: nitrogen: carbon monoxide: carbon dioxide: water: argon = 1.0: 73.4: 24.5: 0.0: 0.0: 0.9: 0,2 (mol%).
The obtained synthesis gas contained hydrogen and nitrogen at a molar ratio of about 3:1 which was optimal for a raw gas for ammonia synthesis.

### Example 2

An oxygen-enriched air having an oxygen concentration of 40% by volume was prepared using a nitrogen-permeating membrane separation unit, A mixed gas of 300°C was obtained by adding steam and the oxygen-enriched air as obtained above at flow rates of 4.9 kg/hr and 4.4 Nm³/hr, respectively, to a raw natural gas having a flow rate of 2.4 Nm³/hr which was obtained through a hydrodesulfurization process by adding hydrogen to a natural gas (having a composition of methane: ethane: propane: butane = 88.56: 7.21: 3.05: 1.18 in terms of mol%). The obtained mixed gas was transferred to a one-step catalytic reforming reactor in the same manner as in Example 1, treated by the same reaction conditions as in Example 1, and was further subjected to the shift reaction, carbon dioxide removal, and methanation reaction in the same manner as in Example 1, thereby yielding a synthesis gas.

The obtained synthesis gas contained hydrogen and nitrogen at a molar ratio of 2.5:1. This ratio corresponds to the lower limit for the ratio where no further concentration adjustment is required when considering the production efficiency in the ammonia synthesis reaction. In other words, when the oxygen concentration in the oxygen-enriched air is less than 40% by volume, the advantages of the present invention cannot be fully achieved.

### Example 3

An oxygen-enriched air having an oxygen concentration of 60% by volume was prepared using a pressure swing adsorption unit. A mixed gas of 300°C was obtained by adding steam and the oxygen-enriched air as obtained above at flow rates of 7.3 kg/hr and 3.8 Nm³/hr, respectively, to a raw natural gas having a flow rate of 2.4 Nm³/hr which was obtained through a hydrodesulfurization process by adding hydrogen to a natural gas (having a composition of methane: ethane: propane: butane = 88.56: 7.21: 3.05: 1.18 in terms of mol%). The obtained mixed gas was transferred to a one-step catalytic reforming reactor in the same manner as in Example 1, treated by the same reaction conditions as in Example 1, and was further subjected to the shift reaction, carbon dioxide removal, and methanation reaction in the same manner as in Example 1, thereby yielding a synthesis gas.

The obtained synthesis gas contained hydrogen and nitrogen at a molar ratio of 3.5:1. This ratio is close to the upper limit for the ratio where no further concentration adjustment is required when considering the production efficiency in the ammonia synthesis reaction. In other words, when the oxygen concentration in the oxygen-enriched air exceeds 60% by volume, the advantages of the present invention cannot be fully achieved.

### Example 4

An oxygen-enriched air having an oxygen concentration of 50% by volume was prepared using a pressure swing adsorption unit. A mixed gas of 300°C was obtained by adding steam and the oxygen-enriched air as obtained above at flow rates of 9,9 kg/hr and 4.2 Nm³/hr, respectively, to a raw natural gas having a flow rate of 2.4 Nm³/hr which was obtained through a hydrodesulfurization process by adding hydrogen to a natural gas (having a composition of methane: methane: propane: butane = 88.56: 7.21: 3.05: 1.18 in terms of mol%). The obtained mixed gas was transferred to a one-step catalytic reforming reactor in the same manner as in Example 1, treated by the same reaction conditions as in Example 1, and was further subjected to the shift reaction, carbon dioxide removal and methanation, reaction in the same manner as in Example 1, thereby yielding a synthesis gas,

However, the reaction was conducted so that the reaction pressure in the one-step catalytic reforming reactor was 5.5 MPa, the reaction pressure in the methanation reactor was 5.1 MPa, and the reaction pressure as a whole was 3.0 MPa higher than that in Example 1. The obtained synthesis gas contained hydrogen and nitrogen at a molar ratio of about 3:1 which was an optimal composition for a raw gas for ammonia synthesis,

### Example 5

An oxygen-enriched air having an oxygen concentration of 43% by volume was prepared using a nitrogen-permeating membrane separation unit. A mixed gas of 300°C was obtained by adding steam and the oxygen-enriched air as obtained above at flow rates of 3.8 kg/hr and 3.5 Nm³/hr, respectively, to a raw natural gas having a flow rate of 2.4 Nm³/hr which was obtained through a hydrodesulfurization process by adding hydrogen to a natural gas (having a composition of methane: ethane: propane: butane = 88.56; 7.21: 3.05: 1.18 in terms of mol%). The obtained mixed gas was transferred to a one-step catalytic reforming reactor in the same manner as in Example 1, treated by the same reaction conditions as in Example 1, and was further subjected to the shift reaction, carbon dioxide removal, and methanation reaction in the same manner as in Example 1, thereby yielding a synthesis gas.

However, the reaction was conducted so that the reaction pressure in the one-step catalytic reforming reactor was 1.5 MPa, the reaction pressure in the methanation reactor ways 1.1 MPa, and the reaction pressure as a whole was 1.0 MPa lower than that in Example 1. The obtained synthesis gas contained hydrogen and nitrogen at a molar ratio of about 3:1 which was an optimal composition for a raw gas for ammonia synthesis.

### Comparative Example 1

An oxygen-enriched air having an oxygen concentration of 39% by volume was prepared using a nitrogen-permeating membrane separation unit. Steam and the oxygen-enriched air as obtained above were added at flow rates or 3.5 kg/hr and 4.3 Nm³/hr, respectively, to a raw natural gas having a flow rate of 2.4 Nm³/hr which was obtained through a hydrodesulfurization process by adding hydrogen to a natural gas (having a composition of methane; ethane: propane: butane = 88.56: 7.21: 3.05: 1.18 in terms of mol%), followed by the heating of a mixed gas to a temperature of 300°C. The obtained mixed gas was transferred to a one-step catalytic reforming reactor in the same manner as in Example 1, treated by the same reaction conditions as in Example 1, and was further subjected to the shift reaction, carbon dioxide removal, and methanation reaction in the same manner as in Example 1, thereby yielding a synthesis gas.

Although the obtained synthesis gas contained hydrogen and nitrogen at a molar ratio of 2.5:1, it also contained 2 mol% or more of unreacted methane. In other words, it was revealed that the specific consumption of the amount of raw natural gas used in the ammonia synthesis was poor, and thus the efficiency was low.

From the above results, it is apparent that when the oxygen concentration in the oxygen-enriched air is low, it becomes impossible to adjust the amount of steam to be mixed, which increases the amount of unreacted methane and lowers the efficiency as a result, and thus a suitable oxygen concentration in the oxygen-enriched air is not less than 40% by volume.

### Comparative Example 2

An oxygen-enriched air having an oxygen concentration of 61% by volume was prepared by diluting an oxygen source obtained in an air liquefaction/separation unit which had an oxygen concentration of 90% by volume with air. A mixed gas of 300°C was obtained by adding steam and the oxygen-enriched air as obtained above at flow rates of 13.0 kg/hr and 4.0 Nm³/hr, respectively, to a raw natural gas having a flow rate of 2.4 Nm³/hr which was obtained through a hydrodesulfurization process by adding hydrogen to a natural gas (having a composition of methane: ethane; propane: butane = 88.56: 7.21: 3.05: 1.18 in terms of mol%). The obtained mixed gas was transferred to a one-step catalytic reforming reactor in the same manner as in Example 4, treated by the same reaction conditions as in Example 4, and was further subjected to the shift reaction, carbon dioxide removal, and methanation reaction in the same manner as in Example 1, thereby yielding a synthesis gas.

The obtained synthesis gas contained hydrogen and nitrogen at a molar ratio of 3.5:1, and it also contained 1 mol% or less of unreacted methane, which was not a practical problem, However, the amount of the product gas produced (that is, the raw gas for ammonia synthesis) was lower than that of Example I by 15%, and thus it was revealed that also in this case, the specific consumption of the amount of raw natural gas used in the ammonia synthesis was poor, and thus the efficiency was low.

From the above results, it is apparent that when the oxygen concentration in the oxygen-enriched air is too high, the efficiency declines, and thus a suitable oxygen concentration in the oxygen-enriched air is not more than 60% by volume.

### INDUSTRIAL APPLICABILITY

According to the present invention, since the steam reforming reaction and air partial oxidation reaction proceed at the same time in one step by using an oxygen-enriched air having an oxygen concentration of 40 to 60% by volume, only one reactor is required, and thus it is possible to simplify the production facilities, In addition, since there is no need to heat a reaction tube from the outside and the reaction temperature can be suppressed to a low level, the extent of catalyst deterioration is low. Furthermore, since the effects can be achieved, for example, it is possible to obtain a raw gas for ammonia synthesis which contains hydrogen and nitrogen at a molar ratio of about 3:1 1 without providing a pressure swing adsorption process or the like in the later step, the present invention can be used industrially.

## Claims

1. A method for producing a raw gas for ammonia synthesis comprising:
supplying light hydrocarbons, steam and an oxygen-enriched air for a catalytic partial oxidation reaction, thereby yielding a raw gas for ammonia synthesis containing hydrogen and nitrogen,
wherein an oxygen-enriched air having an oxygen concentration of 40 to 60% by volume is used as the oxygen-enriched air.

2. The method for producing a raw gas for ammonia synthesis according to Claim 1,
wherein in the catalytic partial oxidation reaction, a catalyst is used, in which at least one metal selected from group VIII metals in the periodic table and gold is supported.

3. The method for producing a raw gas for ammonia synthesis according to Claim 1,
wherein the catalytic partial oxidation reaction is carried out at a pressure of 1 to 10 MPa and a temperature of 200 to 1,500°C.

4. The method for producing a raw gas for ammonia synthesis according to Claim 1.
wherein a ratio between oxygen in the oxygen-enriched air and carbon in the light hydrocarbons (i.e., O₂/C) is from 0.3 to 1.0 (mol/mol).

5. The method for producing a raw gas for ammonia synthesis according to Claim 1,
wherein a ratio between the steam and carbon in the light hydrocarbons is from 1 to 5 (mol/mol).

6. The method for producing a raw gas for ammonia synthesis according to Claim 1, wherein the catalytic partial oxidation reaction is carried out in a one-step reactor.

7. An apparatus for producing a raw gas for ammonia synthesis comprising;
an oxygen-enriched air supply source which generates and supplies an oxygen-enriched air having an oxygen concentration of 40 to 60% by volume; and
a catalytic reforming reactor which introduces the oxygen-enriched air from the oxygen-enriched air supply source, steam and light hydrocarbons and carries out a catalytic partial oxidation reaction.

8. The apparatus for producing a raw gas for ammonia synthesis according to Claim 7,
wherein the catalytic reforming reactor is a reactor filled with a catalyst in which at least one metal selected from group VIII metals in the periodic table and gold is supported.

9. The apparatus for producing a raw gas for ammonia synthesis according to Claim 7,
wherein the oxygen-enriched air supply source includes any one of an oxygen separation membrane unit, an air liquefaction/separation unit and a pressure swing absorption unit.

10. The apparatus for producing a raw gas for ammonia synthesis according to Claim 7, wherein the catalytic reforming reactor is a one-step reactor.
